# EUROPÄISCHE PATENTSCHRIFT

(11) **EP 2 764 768 B1**
(45) Veröffentlichungstag und Bekanntmachung des Hinweises auf die Patenterteilung: **23.12.2020**
(21) Anmeldenummer: 13154253.2
(22) Anmeldetag: 06.02.2013
(51) Int. Cl.: A01G 25/02

(54) **Tropfbewässerungsrohr mit Dosierelementen**
Drip irrigation tube with metering elements
Tuyau d'irrigation goutte à goutte avec des éléments de dosage

(43) Veröffentlichungstag der Anmeldung: 13.08.2014
(73) Patentinhaber: THE Machines Yvonand SA, 1462 Yvonand (CH)
(72) Erfinder: Loebinger, Ahai, 1462 Yvonand (CH); Reith, Wolfgang, 1462 Yvonand (CH)
(74) Vertreter: BOVARD AG

(56) Entgegenhaltungen:
- WO-A1-2007/068523
- WO-A1-2008/010026
- US-A- 5 236 130
- US-A- 5 282 578

## Beschreibung

Die vorliegende Erfindung bezieht sich auf ein Tropfbewässerungsrohr mit Dosierelementen, welche fortlaufend auf einem Träger angeordnet sind, welcher im Tropfbewässerungsrohr angeordnet ist, welche Dosierelemente jeweils einen Eintrittsbereich, durch welchen das Wasser vom Rohr in das Dosierelement gelangt, einen Dosierbereich, in welchem eine Druckreduzierung des durchfliessenden Wassers erfolgt und einen Austrittbereich aufweisen, durch welchen das Wasser aus dem Tropfbewässerungsrohr austritt, und im Austrittbereich in der Rohrwandung mindestens zwei Austrittöffnungen angebracht sind, die voneinander in Längsrichtung des Tropfbewässerungsrohres beabstandet sind.

In bekannter Weise dienen derartige mit Dosierelementen versehene Tropfbewässerungsrohren zur direkten Bewässerung von Pflanzen. Die Tropfbewässerungsrohre können hierzu beispielsweise so ausgelegt werden, dass sich im Bereich jeder Pflanze ein Austrittbereich eines Dosierelementes mit einer Austrittöffnung befindet, durch welche das Wasser tropfweise ausgelassen wird. Durch diese direkte Bewässerung kann der Wasserverbrauch sehr sparsam sein.

Tropfbewässerungsrohre bei welchen die Dosierelemente fortlaufend hintereinander auf einem Träger angeordnet sind, welcher in das Tropfbewässerungsrohr eingesetzt ist, sind beispielsweise aus dem Dokument US 4 247 051 A bekannt. Hierbei sind die Dosierelemente auf einem Randbereich eines Bandes, welches zu einem Rohr zusammengefaltet wird, angeordnet. Die Dosierelemente werden dadurch abgeschlossen, dass die beiden Randbereiche des zu einem Rohr gebildeten Bandes übereinander lappend sind und zwischen sich die Dosierelemente einschliessen.

Aus dem Dokument EP 1 929 859 A ist ebenfalls ein Tropfbewässerungsrohr bekannt, in welchem sich die Dosierelemente auf einem Band befinden, welches in den extrudierten Rohrkörper eingefügt wird und mit dem Rohrkörper verbunden wird, sodass auch bei dieser Ausführungsform die Dosierelemente zwischen dem Band und dem Rohrkörper eingeschlossen sind.

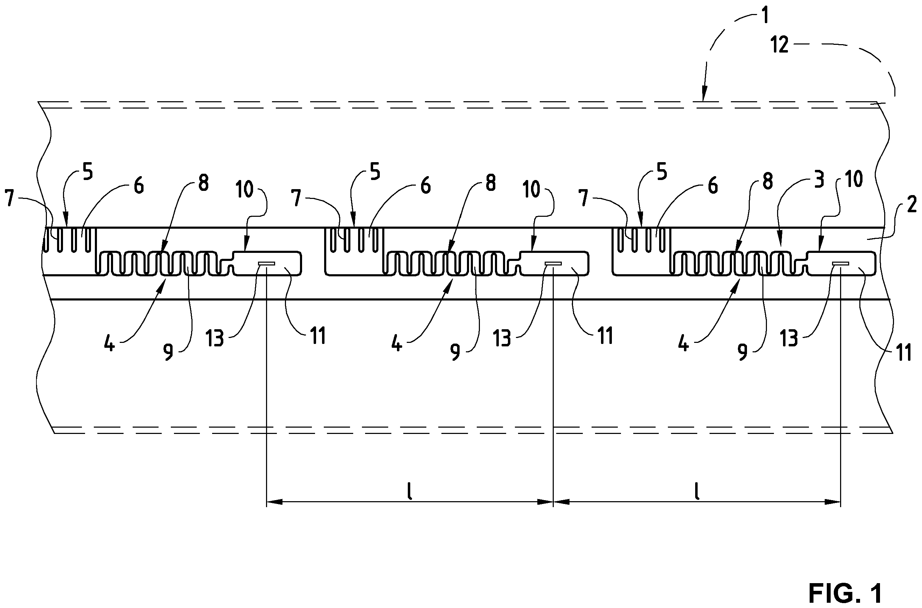

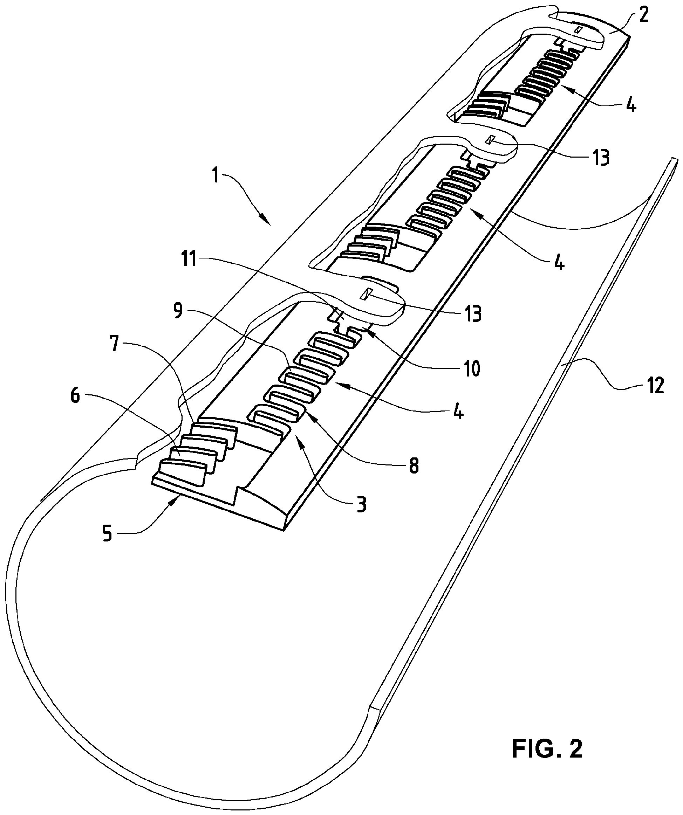

Die Anordnung dieser beiden bekannten Ausführungsformen von Tropfbewässerungsrohren mit fortlaufenden Dosierelementen weisen einen Nachteil auf, der nachfolgend anhand der beiliegenden Figur 1 und Figur 2 beschrieben wird, wobei
Fig. 1 schematisch eine Draufsicht auf ein entsprechendes Tropfbewässerungsrohr mit fortlaufenden Dosierelementen und
Fig. 2 schematisch eine räumliche Darstellung dieses Tropfbewässerungsrohres 1 zeigt,
die nachfolgend näher beschrieben werden.

Aus den Figuren 1 und 2 ist ein aus dem Stand der Technik bekanntes Tropfbewässerungsrohr 1 dargestellt. In dieses Tropfbewässerungsrohr 1 eingesetzt ist ein Band 2, auf dessen Oberfläche die Strukturen 3 eingeprägt sind, die die Dosierelemente 4 bilden. In bekannter Weise ist die Oberfläche des Bandes 2, auf welcher die Strukturen 3 angebracht sind, mit der Innenseite der Wandung des Tropfbewässerungsrohren verbunden, was üblicherweise während des Extrusionsvorgangs des Rohrkörpers einhergeht. Jedes der Dosierelemente 4 weist einen Eintrittsbereich 5 auf, welcher gegen den Innenbereich des Rohres mit einer Eintrittsöffnung 6 ausgestattet ist. In diese Eintrittsöffnung 6 können Vorsprünge 7 eingesetzt sein, wodurch vermieden wird, dass zusammen mit dem Wasser Schmutzteile in die Dosierelemente eindringen können. Anschliessend an die Eintrittsöffnung gelangt das Wasser in den Dosierbereich 8, der als Labyrinth 9 ausgebildet ist, in welchen der Druck des einströmenden Wassers in bekannter Weise reduziert wird. Nach dem Durchlauf des Dosierbereichs 8 gelangt das Wasser mit geringerem Druck in den Austrittbereich 10, der im Wesentlichen aus einer Austrittkammer 11 besteht, in deren Bereich in die Rohrwandung 12 des Tropfbewässerungsrohrs 1 eine Austrittsöffnung 13 angebracht ist. Durch diese Austrittöffnung 13 kann somit das Wasser tropfweise aus dem Tropfbewässerungsrohr 1 austreten und den umliegenden Bereich bewässern.

Wenn die Wasseraustritt aus den Austrittsöffnungen reduziert werden soll, ohne den Druck im Tropfbewässerungsrohr 1 absenken zu müssen, müsste der Dosierbereich 8 so verändert werden, dass eine grössere Druckreduktion erfolgt. Hierzu müsste die Labyrinthanordnung 9 enger gemacht werden, was aber zur Folge haben kann, dass die verengten Durchgänge leichter verstopft werden könnten, oder es müsste eine kostenintensive Filtrierung des zugeführten Wassers vorgenommen werden.

Das Dokument WO 2007/068523 zeigt ein Tropfbewässerungsrohr mit Dosierelementen, bei welchem die Austrittkammern versetzt zu den Dosierelementen angeordnet sind, die Austrittöffnungen bezüglich der Wassereinleitung beliebig angebracht sind.

Die Aufgabe der vorliegenden Erfindung besteht somit darin, ein Tropfbewässerungsrohr zu schaffen, bei welchem die Wasseraustrittmenge pro Austrittöffnung reduziert werden kann, ohne dass eine Vergrösserung der Verstopfungsrisiken im Dosierbereich in Kauf genommen müssen und ohne dass eine kostenintensive Filtrierung des Wassers vorgenommen werden muss.

Erfindungsgemäss erfolgt die Lösung dieser Aufgabe dadurch, dass die Austrittbereiche eines Tropfbewässerungsrohrs mit Dosierelementen jeweils mindestens eine Austrittkammer aufweisen, in deren Bereich in der Rohrwandung zwei voneinander beabstandete Austrittöffnungen angebracht sind, dass die Wassereinleitung in jede Austrittkammer in einem mittleren Bereich erfolgt und dadurch der Abstand der Austrittöffnungen von der Wassereinleitung gleich ist und dass die Austrittkammern der Austrittbereiche in Längsrichtung des Tropfbewässerungsrohres versetzt zu den Dosierbereichen angeordnet sind. Durch diese Ausgestaltung desTropfbewässerungsrohrs mit Dosierelementen ergeben sich mehr Austrittöffnungen über eine Längeneinheit als beim bekannten Stand der Technik. Insbesondere für kleine Wasserauslassmengen müssen dadurch die

Dosierbereiche und deren Labyrinthe nicht zu eng dimensioniert werden wodurch die oben beschriebenen Nachteile vermieden werden können.

Wie aus den beiden Figuren 1 und 2 ersichtlich ist, sind Eintrittbereich 5, Dosierbereich 8 und Austrittbereich 10 dieser Dosierelemente 4 in Linie hintereinander angeordnet. Um den Wasserauslass auf eine gewisse Menge reduzieren zu können, ist somit eine gewisse Länge eines Dosierelementes 4 erforderlich.

Die Austrittbereiche weisen mindestens eine Austrittkammer auf, in dessen Bereich in der Rohrwandung mindestens zwei voneinander beabstandete Austrittöffnungen angebracht sind, was eine optimale Funktion ergibt.

Damit die Abstände der Austrittöffnungen nicht zu gross ausfallen sind die Austrittkammern der Austrittbereiche in Längsrichtung des Tropfbewässerungsrohres versetzt zu den Dosierbereichen angeordnet, wodurch der Längenabstand der einzelnen Austrittöffnungen zusätzlich reduziert werden kann.

Um die Abstände der Austrittöffnungen noch geringer halten zu können, können die Austrittbereiche zwei in Längsrichtung des Tropfbewässerungsrohres hintereinander angeordnete Austrittkammern aufweisen, in dessen Bereich in der Rohrwandung jeweils zwei voneinander beabstandete Austrittöffnungen angebracht sind.

In vorteilhafter Weise erfolgt die Wassereinleitung in jede Austrittkammer in einem mittleren Bereich, wodurch ermöglich wird, dass in der Austrittkammer zwischen der Wassereinleitung und den Austrittöffnungen zusätzliche Reduzierelemente angebracht werden können, wodurch die austretende Wassermenge ohne grossen Aufwand und Verstopfungsrisiken nochmals reduziert werden kann.

Die Austrittöffnungen in der Rohrwandung können als Schlitze oder Bohrungen ausgebildet sein, bei dünnwandigeren Rohren sind Schlitze besser geeignet, bei dickwandigeren Rohren werden Bohrungen bevorzugt.

In vorteilhafter Weise sind die die Dosierelemente bildenden Strukturen in den Träger eingeprägt, was eine einfache Herstellung ermöglicht.

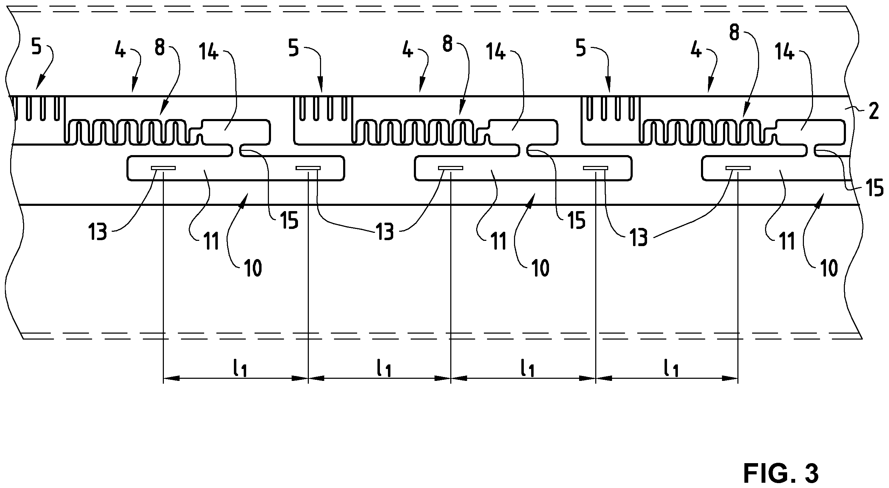

Ausführungsformen der Erfindung werden nachfolgend anhand der beiliegenden Figuren 3 bis 10 beispielhaft näher erläutert.

Es zeigt
Fig. 3 eine schematische Draufsicht auf eine erste Ausführungsform von Dosierelementen, bei welchen jeweils eine Austrittkammer mit zwei Austrittöffnungen vorgesehen ist;

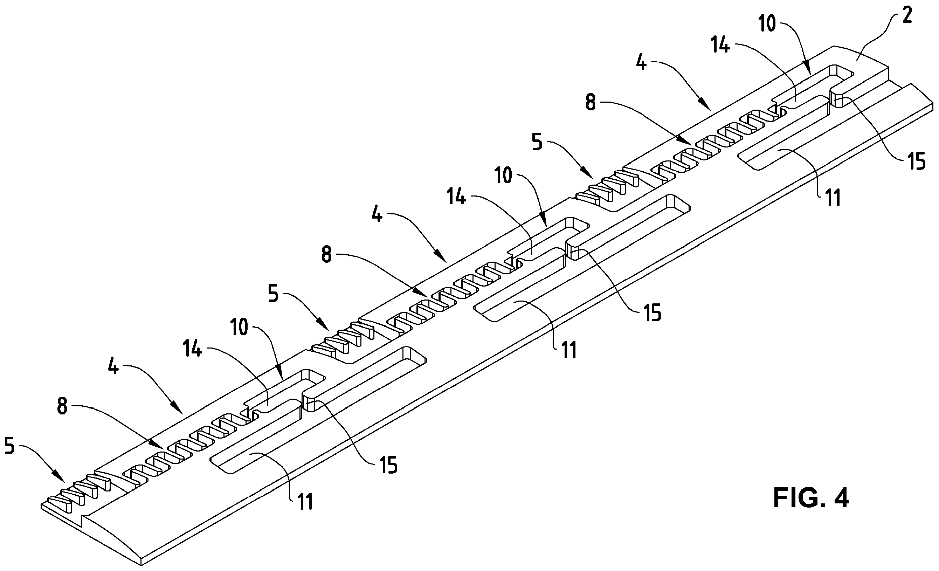

Fig. 4 in räumlicher Darstellung die Dosierelemente gemäss Fig. 3;

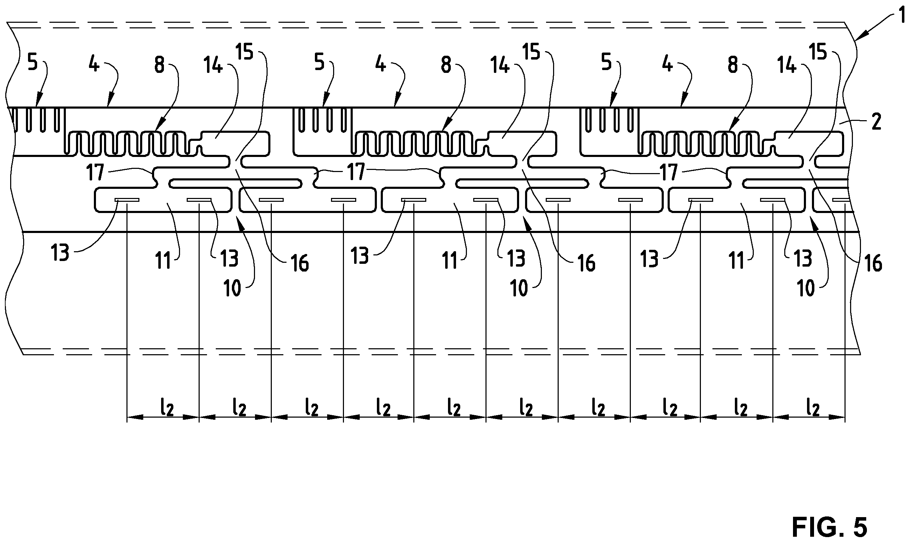

Fig. 5 die Draufsicht auf eine zweite Ausführungsform von Dosierelementen, bei welchen jeweils zwei Austrittkammern mit jeweils zwei Austrittöffnungen vorgesehen sind;

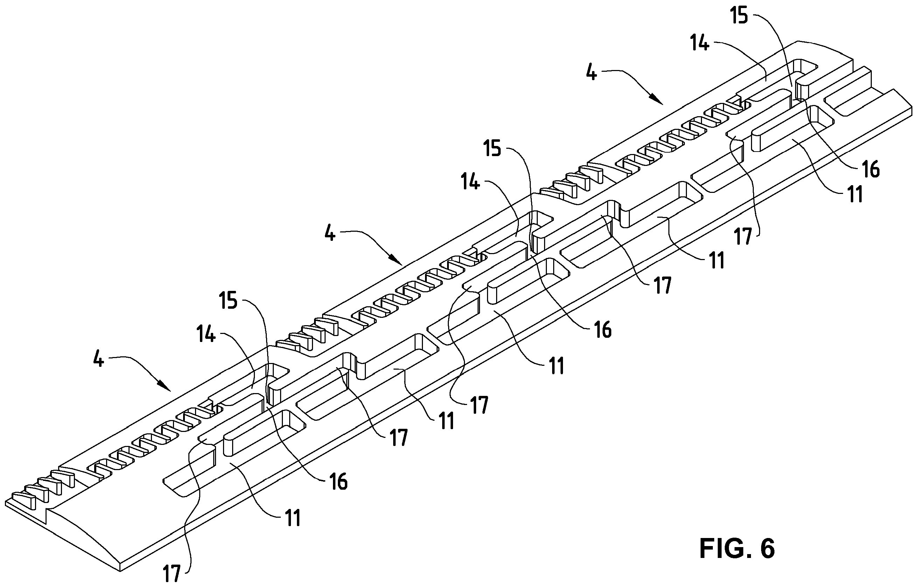

Fig. 6 eine räumliche Darstellung der Dosierelemente gemäss Fig. 5;

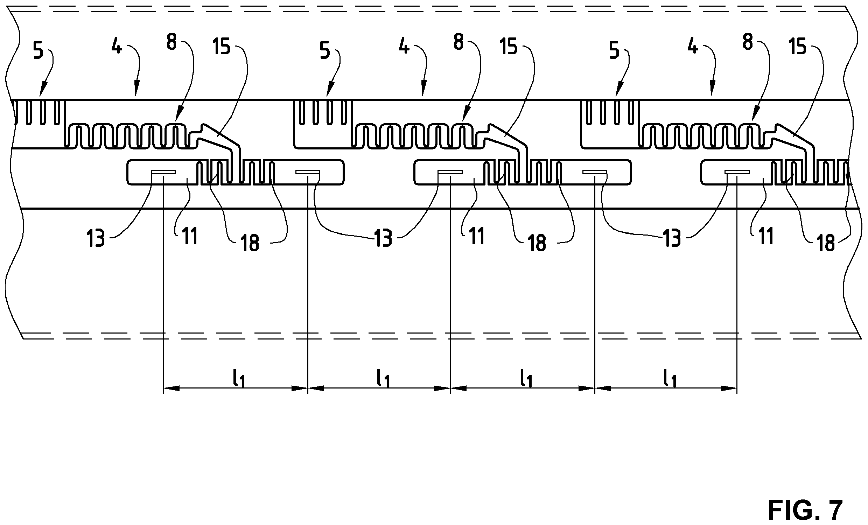

Fig. 7 eine Draufsicht auf eine dritte Ausführungsform der Dosierelemente, bei welchen in den jeweiligen Austrittkammern zusätzliche Reduzierelemente vorgesehen sind;

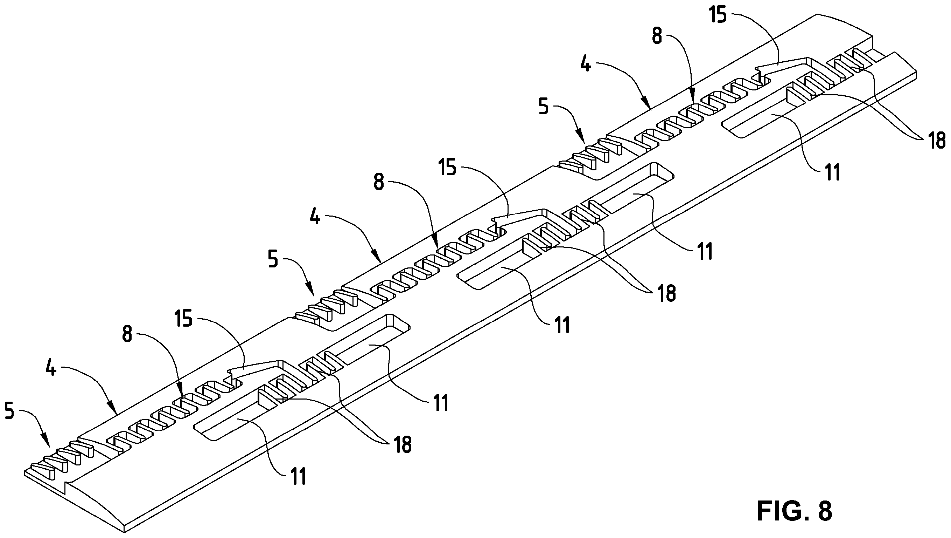

Fig. 8 eine räumliche Darstellung der Dosierelemente gemäss Fig. 7;

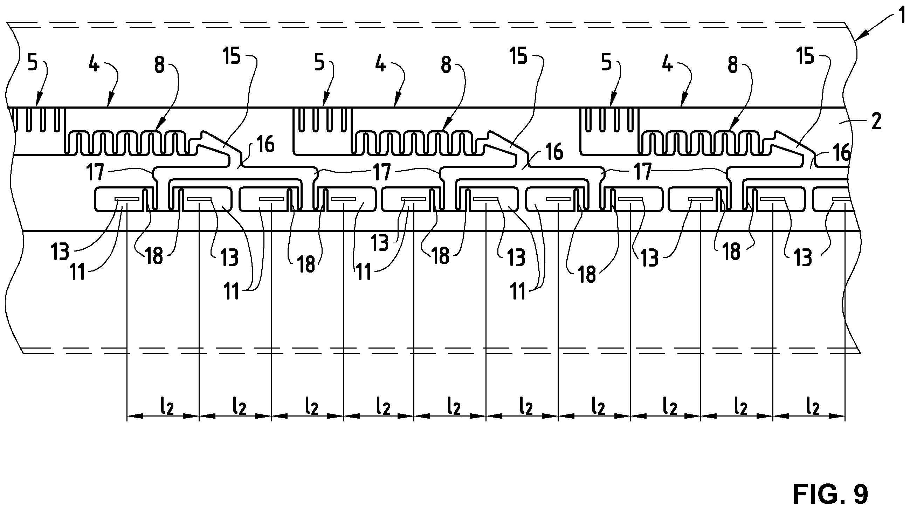

Fig. 9 eine vierte Ausführungsform der Dosierelemente, bei welchen in den jeweils beiden Austrittkammern jeweils zusätzliche Reduzierelemente vorgesehen sind; und

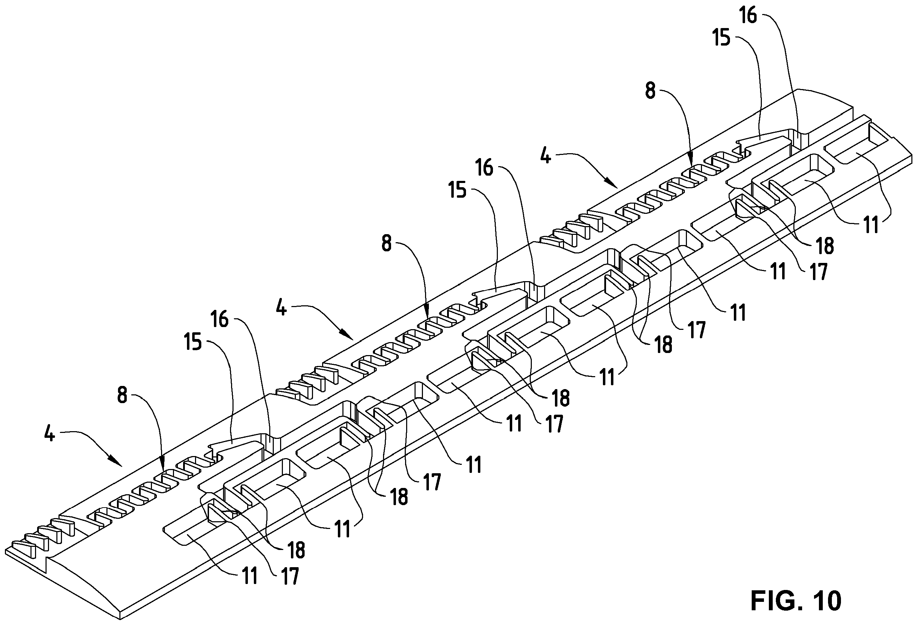

Fig. 10 in räumlicher Darstellung die Dosierelemente gemäss Fig. 9.

Die in den Figuren 3 und 4 dargestellte erste Ausführungsform zeigt ebenfalls die Anordnung von Dosierelementen 4 auf einem Band 2, wie dies vorgängig zu den Figuren 1 und 2 im Detail beschrieben worden ist. Dieses Band 2 ist in das Tropfbewässerungsrohr 1 eingesetzt und mit diesem in bekannter Weise verbunden. Die im Band 2 eingeprägten Dosierelemente 4 umfassen wiederum jeweils einen Eintrittsbereich 5, einen Dosierbereich 8 und einen Austrittbereich 10, die jeweils den beschriebenen Bereichen gemäss Fig. 1 und 2 entsprechen. Bei der hier vorliegenden Ausführungsform umfasst der Austrittbereich 10 eine Vorkammer 14, die an den Dosierbereich 8 angeschlossen ist. Diese Vorkammer ist über eine Leitung 15 mit der Austrittkammer 11 verbunden. Diese Austrittkammer 11 ist in Längsrichtung des Tropfbewässerungsrohres 1 versetzt zu den Dosierbereichen 8 angeordnet und erstreckt sich über eine bestimmte Länge. Jede der Austrittkammern 11 ist mit zwei Austrittöffnungen 13 ausgestattet, die an den jeweiligen Randbereichen der Austrittkammern 11 angebracht sind. Diese Austrittöffnungen 13 sind so angeordnet, dass sie jeweils gegenseitig einen konstanten Abstand L1 voneinander haben.

Durch diese Anordnung wird über ein Dosierelement das Wasser zwei Austrittöffnungen 13 zugeführt. Dies bedeutet, dass die durch das Dosierelement dosierte Wassermenge durch zwei Austrittöffnungen 13 austreten kann, pro Austrittöffnungen 13 tritt somit nur die halbe Menge von Wasser aus, das Dosierelement muss nicht für eine geringere Wassermenge ausgelegt werden, eine Verstopfungsgefahr bleibt entsprechend gering. Zusätzlich kann mit dieser Ausgestaltung erreicht werden, dass die Abstände L1 der Austrittsöffnung 13 gegenüber dem Stand der Technik verkleinert werden kann, der Abstand der zu bewässerenden Pflanzen kann somit auch kleiner werden, es wäre auch denkbar, dass über zwei Austrittöffnungen jeweils eine Pflanze von zwei Seiten bewässert wird.

Die Figuren 5 und 6 zeigen eine weitere Ausführungsform der Erfindung, bei welcher die Dosierelemente 4 mit dem Eintrittsbereich 5, dem Dosierbereich 8 bis zur Vorkammer 14 gleich ausgebildet ist, wie beim vorhergehend beschriebenen Ausführungsbeispiel gemäss den Figuren 3 und 4. Beim hier dargestellten Ausführungsbeispiel weist die aus der Vorkammer 14 austretende Leitung 15 eine Verzweigung 16 auf, durch welche zwei Äste 17 gebildet werden, jeder Ast 17 dieser Verzweigung 16 mündet in eine Austrittkammer 11, pro Dosierelement 4 sind somit 4 Austrittöffnungen 13 vorgesehen.

Mit dieser Ausführungsform tritt somit das Wasser pro Dosierelement 4 durch vier Austrittöffnungen 13 aus, die Austrittmenge pro Austrittöffnung 13 wird dadurch gegenüber dem vorherigen Ausführungsbeispiel nochmals kleiner, die gegenseitigen Abstände der Austrittöffnungen 13 kann auf einen noch geringeren Abstand L2 reduziert werden.

Aus den Figuren 7 und 8 ist eine weitere Ausführungsform der Erfindung dargestellt, die im Wesentlichen der Ausführungsform entspricht, wie sie zu den Figuren 3 und 4 beschreiben worden ist. Der Unterschied besteht darin, dass in der hier dargestellten Ausführungsform der jeweilige Dosierbereich 8 direkt in die Leitung 15 mündet, welche in einen mittleren Bereich in die jeweilige Austrittkammer 11 eintritt. Von diesem mittleren Eintrittsbereich der Leitung 15 in die Austrittkammer 11 gegen die Austrittsöffnungen 13 hin sind zusätzliche Reduzierelemente 18 angebracht, mit welchen der Druck des durch die Leitung 15 eintretenden Wassers vor dem Austritt aus den Austrittöffnungen 13 nochmals reduziert wird. Dadurch kann der Wasseraustritt aus den Austrittöffnungen 13 nochmals reduziert werden, wobei auch hier der Abstand L1 der Austrittöffnungen 13 untereinander gering gehalten werden kann.

Die Ausführungsform, wie sie in den Figuren 9 und 10 dargestellt ist, entspricht im Prinzip der Ausführungsform, wie sie in den Figuren 5 und 6 dargestellt ist, der wesentliche Unterschied besteht darin, dass das Wasser, das aus dem Dosierbereich 8 austritt, direkt in eine Leitung 15 gelangt, die wiederum mit einer Verzweigung 16 ausgestattet ist und die beiden dadurch gebildeten Äste 17 in die Austrittkammer 11 münden, wobei im Bereich des Eintritts des jeweiligen Astes 17 in die Austrittkammer 11 ebenfalls zusätzliche Reduzierelemente 18 angebracht sind. Auch hier wird erreicht, dass das durch die Austrittöffnungen 13 austretende Wasser nochmals mengenmässig reduziert werden kann. Auch hier sind die Abstände L2 der Austrittöffnungen 13 sehr gering.

Mit diesem erfindungsgemässen Tropfbewässerungsrohr mit Dosierelementen kann die durch die Austrittöffnungen austretende Wassermenge reduziert werden, ohne dass die Dosierbereiche zu eng ausgestaltet werden müssen, was zu Verstopfungen führen könnte, und wobei die Abstände der Austrittöffnungen, aus denen das Wasser zur Bewässerung tropfweise austritt, auch entsprechend gering gehalten werden können, was die Anwendungsmöglichkeiten entsprechend verbessert.

## Patentansprüche

1. Tropfbewässerungsrohr (1) mit Dosierelementen, welche fortlaufend auf einem Träger (2) angeordnet sind, welcher im Tropfbewässerungsrohr (1) angeordnet ist, welche Dosierelemente (4) jeweils einen Eintrittsbereich (5), durch welchen das Wasser vom Tropfbewässerungsrohr (1) in das Dosierelement (4) gelangt, einen Dosierbereich (8), in welchem eine Druckreduzierung des durchfliessenden Wassers erfolgt, und einen Austrittbereich (10) aufweisen, durch welchen das Wasser aus dem Tropfbewässerungsrohr (1) austritt, und im Austrittbereich (10) in der Rohrwandung (12) mindestens zwei Austrittöffnungen (13) angebracht sind, die voneinander in Längsrichtung des Tropfbewässerungsrohres (1) beabstandet sind, **dadurch gekennzeichnet, dass** die Austrittbereiche (10) jeweils mindestens eine Austrittkammer (11) aufweisen, in deren Bereich in der Rohrwandung (12) zwei voneinander beabstandete Austrittöffnungen (13) angebracht sind, dass die Wassereinleitung in jede Austrittkammer (11) in einem mittleren Bereich erfolgt und dadurch der Abstand der Austrittöffnungen (13) von der Wassereinleitung gleich ist und dass die Austrittkammern (11) der Austrittbereiche (10) in Längsrichtung des Tropfbewässerungsrohres (1) versetzt zu den Dosierbereichen (8) angeordnet sind.

2. Tropfbewässerungsrohr (1) mit Dosierelementen nach Anspruch 1, **dadurch gekennzeichnet, dass** die Austrittbereiche (10) zwei in Längsrichtung des Tropfbewässerungsrohres (1) hintereinander angeordnete Austrittkammern (11) aufweisen, in deren Bereich in der Rohrwandung (12) jeweils zwei voneinander beabstandete Austrittöffnungen (13) angebracht sind.

3. Tropfbewässerungsrohr (1) mit Dosierelementen nach Anspruch 1 oder 2, **dadurch gekennzeichnet, dass** in der Austrittkammer (11) zwischen der Wassereinleitung und den Austrittöffnungen (13) zusätzliche Reduzierelemente (18) angebracht sind.

4. Tropfbewässerungsrohr (1) mit Dosierelementen nach einem der Ansprüche 1 bis 3, **dadurch gekennzeichnet, dass** die Austrittöffnungen (13) in der Rohrwandung (12) als Schlitze oder Bohrungen ausgebildet sind.

5. Tropfbewässerungsrohr (1) mit Dosierelementen nach einem der Ansprüche 1 bis 4, **dadurch gekennzeichnet, dass** die die Dosierelemente bildenden Strukturen (3) in den Träger (2) eingeprägt sind.

## Claims

1. Drip irrigation tube (1) with dispensing elements, which are arranged continuously on a support (2), which is arranged in the drip irrigation tube (1), which dispensing elements (4) each comprise an inlet region (5), through which the water from the drip irrigation tube (1) enters the dispensing element (4), a dispensing region (8), in which the pressure of the through-flowing water is reduced, and an outlet region (10), through which the water exits the drip irrigation tube (1), at least two outlet openings (13) being disposed in the tube wall (12) in the outlet region (10), which openings are spaced from one another in the longitudinal direction of the drip irrigation tube (1), **characterized in that** the outlet regions (10) each have at least one outlet chamber (11), in the region of which two mutually spaced outlet openings (13) are disposed in the tube wall (12), **in that** water is fed into each outlet chamber (11) in a central region, the distance of the outlet openings (13) from the water infeed thereby being equal, and **in that** the outlet chambers (11) of the outlet regions (10) are arranged offset relative to the dispensing regions (8) in the longitudinal direction of the drip irrigation tube (1).

2. Drip irrigation tube (1) with dispensing elements according to Claim 1, **characterized in that** the outlet regions (10) have two outlet chambers (11) arranged one behind the other in the longitudinal direction of the drip irrigation tube (1), in the region of which outlet chambers two mutually spaced outlet openings (13) are in each case disposed in the tube wall (12).

3. Drip irrigation tube (1) with dispensing elements according to Claim 1 or 2, **characterized in that** additional reducing elements (18) are disposed in the outlet chamber (11) between the water infeed and the outlet openings (13).

4. Drip irrigation tube (1) with dispensing elements according to one of Claims 1 to 3, **characterized in that** the outlet openings (13) in the tube wall (12) are configured as slots or holes.

5. Drip irrigation tube (1) with dispensing elements according to one of Claims 1 to 4, **characterized in that** the structures (3) forming the dispensing elements are stamped into the support (2).

## Revendications

1. Tuyau d'irrigation de type goutte à goutte (1), comprenant des éléments de distribution (4) aménagés de façon continue sur un support (2), qui est lui-même agencé dans le tuyau d'irrigation de type goutte à goutte (1), lesquels éléments de distribution (4) comprennent chacun une zone d'entrée (5), à travers laquelle l'eau du tuyau d'irrigation de type goutte à goutte (1) pénètre dans l'élément de distribution (4), une zone de dosage (8), dans laquelle la pression d'écoulement de l'eau est réduite, et une zone de sortie (10), via laquelle l'eau sort du tuyau d'irrigation de type goutte à goutte (1), au moins deux ouvertures de sortie (13) étant disposées dans la paroi du tuyau (12) au niveau de la zone de sortie (10), lesquelles ouvertures sont espacées l'une de l'autre dans la direction longitudinale du tuyau d'irrigation de type goutte à goutte (1), **caractérisé en ce que** les zones de sortie (10) possèdent chacune au moins une chambre de sortie (11), au niveau desquelles deux ouvertures de sortie (13) mutuellement espacées l'une de l'autre sont aménagées dans la paroi du tuyau (12), **en ce que** la conduite d'alimentation en eau arrive dans une zone centrale de chaque chambre de sortie (11), la distance de chaque ouverture de sortie (13) par rapport à la conduite d'alimentation en eau étant par conséquent égale, et **en ce que** les chambres de sortie (11) des zones de sortie (10) sont agencées de manière décalée par rapport aux zones de distribution (8) selon la direction longitudinale du tuyau d'irrigation de type goutte à goutte (1).

2. Tuyau d'irrigation de type goutte à goutte (1) comportant des éléments de distribution selon la revendication 1, **caractérisée en ce que** les zones de sortie (10) présentent deux chambres de sortie (11) agencées l'une derrière l'autre selon la direction longitudinale du tuyau d'irrigation de type goutte à goutte (1), au niveau desquelles sont respectivement aménagées deux ouvertures de sortie (13) mutuellement espacées l'une de l'autre dans la paroi du tuyau (12).

3. Tuyau d'irrigation de type goutte à goutte (1) comportant des éléments de distribution selon la revendication 1 ou 2, **caractérisé en ce que** des éléments de réduction (18) supplémentaires sont disposés dans la chambre de sortie (11) entre la conduite d'alimentation en eau et les ouvertures de sortie (13).

4. Tuyau d'irrigation de type goutte à goutte (1) comportant des éléments de distribution selon l'une des revendications 1 à 3, **caractérisé en ce que** les ouvertures de sortie (13) aménagées, dans la paroi du tuyau (12), sous forme de fentes ou de trous.

5. Tuyau d'irrigation de type goutte à goutte (1) comportant des éléments de distribution selon l'une des revendications 1 à 4, **caractérisé en ce que** les structures (3) formant les éléments de distribution sont imprimées dans le support (2).
